# EUROPEAN PATENT APPLICATION

(11) **EP 4 663 411 A1**
(43) Date of publication of application: **17.12.2025**
(21) Application number: 25181747.4
(22) Date of filing: 10.06.2025
(51) Int. Cl.: B32B 41/00, B32B 37/22, B32B 39/00

(54) **LAMINATING SYSTEM AND PROGRAM**

(30) Priority: 12.06.2024 JP 2024095076
(71) Applicant: KONICA MINOLTA, INC., Tokyo 100-7015 (JP)
(72) Inventor: KAMIYA, Shougo, Tokyo, 100-7015 (JP); HAYASHI, Kenichi, Tokyo, 100-7015 (JP); TODA, Hiromichi, Tokyo, 100-7015 (JP); UMEDA, Shiro, Tokyo, 100-7015 (JP); ARAI, Hiroyuki, Tokyo, 100-7015 (JP)
(74) Representative: MFG Patentanwälte Meyer-Wildhagen Meggle-Freund Gerhard PartG mbB

(57) **Abstract**

A laminating system includes, a plurality of film suppliers configured to be capable of supplying a film to be laminated on a sheet; and a laminating processor that laminates the film supplied from the film supplier onto the sheet. The film supplier that supplies the film can be switched.

## Description

### BACKGROUND OF THE INVENTION

### TECHNICAL FIELD

The present invention relates to a laminating system and a program.

### DESCRIPTION OF RELATED ART

Conventionally, a laminating device for performing a laminating process using a laminate film (hereinafter referred to as a film) on a sheet is known (e.g., Japanese Unexamined Patent Publication No. H 5-338039).

However, in the conventional laminating device, when the film runs out during the laminating process, it is necessary to stop the laminating device in order to replace the film. Therefore, when the film runs out, the laminating device is stopped in the middle of the laminating process. In particular, since the laminating process is performed on a large number of sheets in a commercial printing job, there is a high possibility that the film becomes short during the laminating process and the film is replaced. In this case, there are problems in that downtime occurs due to the operation of replacing the film, and productivity in the laminating device is significantly reduced.

### SUMMARY OF THE INVENTION

An object of the present invention is to provide a laminating system and a program that can suppress a reduction in productivity in a laminating process.

According to one aspect of the present invention, a laminating system reflecting one aspect of the present invention includes, a laminating system including:
a plurality of film suppliers configured to be capable of supplying a film to be laminated on a sheet; and
a laminating processor that laminates the film supplied from the film supplier onto the sheet,
wherein the film supplier that supplies the film can be switched.

According to another aspect, the laminating system, wherein the film supplier that supplies the film is switched in accordance with a remaining amount of the film.

According to another aspect, the laminating system, wherein a plurality of laminating devices each including the film supplier and the laminating processor can be connected.

According to another aspect, the laminating system,
further including a plurality of the laminating devices,
wherein each of the plurality of laminating devices includes, as conveyance routes of the sheet, a first route that passes through the laminating processor and a second route that bypasses the first route.

According to another aspect, the laminating system, wherein, while a laminating process is being performed on the sheet in the first route in one laminating device among the plurality of laminating devices, another laminating device conveys the sheet in the second route.

According to another aspect, the laminating system, wherein the conveyance route of the sheet is switched from the first route to the second route in a case in which the sheet is being conveyed by the first route and a remaining amount of the film becomes less than a predetermined amount.

According to another aspect, the laminating system,
further including a laminating device including the laminating processor and the plurality of film suppliers,
wherein, in the laminating device, the film supplier that supplies the film to one of the laminating processors can be switched.

According to another aspect, the laminating system, wherein the laminating device includes a connector that connects the film of the film supplier before switching and the film of the film supplier after switching when switching the film supplier.

According to another aspect, the laminating system,
further including a laminating device including a plurality of laminating processors on a common conveyance path,
wherein the plurality of film suppliers are each configured to be able to supply the film to a corresponding laminating processor, and
wherein in the laminating device, the laminating processor that laminates the film onto the sheet can be switched.

According to another aspect, the laminating system, wherein the laminating processor corresponding to the film supplier in which a remaining amount of the film is less than a predetermined amount is separated from the common conveyance path.

According to another aspect, the laminating system, further including a sensor that senses a remaining amount of the film.

According to another aspect, the laminating system, wherein an interval between the sheets when the film supplier is switched is adjusted according to time required for switching the film supplier.

According to another aspect, the laminating system,
further including an image former that forms an image on the sheet fed from a sheet feeder,
wherein the laminating processor laminates the film onto the sheet on which the image is formed by the image former.

According to another aspect, the laminating system, wherein, during a laminating process by the laminating processor, the film of the film supplier not used for the laminating process can be replaced.

According to one aspect of the present invention, a program reflecting one aspect of the present invention is a program that controls a computer of a laminating system including a plurality of film suppliers configured to be capable of supplying a film to be laminated on a sheet and a laminating processor that laminates the film supplied from the film supplier onto the sheet, the program allowing the computer to function as:
a controller that switches the film supplier that supplies the film.

### BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present invention, and wherein:
FIG. 1 is a front view showing a schematic configuration of a laminating system according to a first embodiment;
FIG. 2 is a functional block diagram showing a control structure of the laminating system according to the first embodiment;
FIG. 3 is a flowchart which shows a flow of a laminating device control process according to the first embodiment;
FIG. 4 is a diagram illustrating an example of a use state screen according to the first embodiment;
FIG. 5 is a diagram illustrating an example of a use state screen according to the first embodiment;
FIG. 6 is a front view showing a schematic configuration of the laminating system according to the

### second embodiment; and

FIG. 7 is a front view illustrating a schematic configuration of a laminating system according to the third embodiment.

### DETAILED DESCRIPTION

Hereinafter, one or more embodiments of the present invention will be described with reference to the drawings. However, the scope of the invention is not limited to the disclosed embodiments.

Hereinafter, embodiment of the present invention will be described in detail with reference to the drawings.

### <First Embodiment>

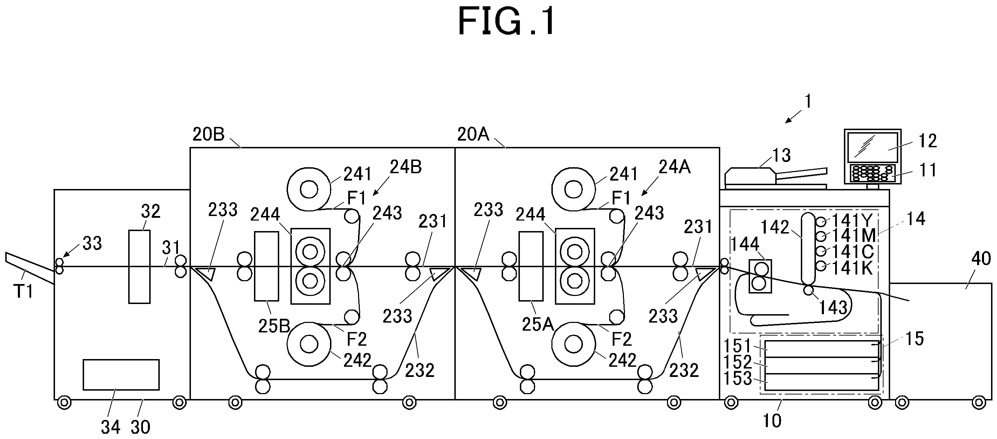

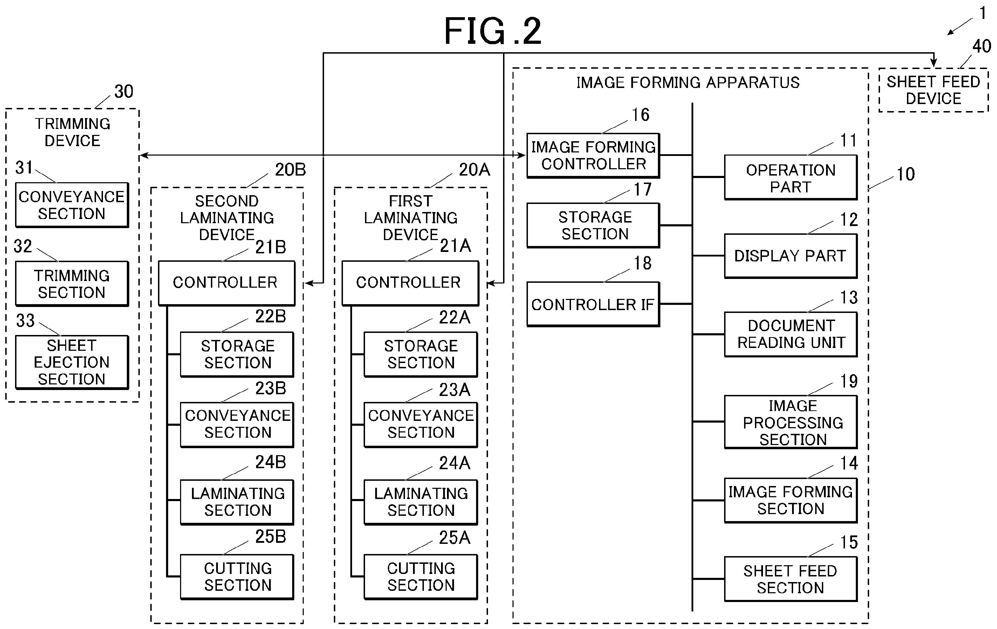

As illustrated in FIGS. 1 and 2, a laminating system (hereinafter, system 1) according to the present embodiment includes a sheet feed device 40, an image forming apparatus 10, a first laminating device 20A, a second laminating device 20B, and a trimming device 30.

A sheet feed device 40 includes sheet feed sections (sheet feeder) (not illustrated) and a sheet conveyance section (not illustrated), and conveys a flat cut sheet, which is a sheet, from one of the sheet feed sections to the image forming apparatus 10 according to a job.

The sheet conveyance section is connected from each sheet feed section to the image forming apparatus 10, and conveys the sheet.

The sheet feed section stores sheets for each predetermined sheet type, size, and the like.

Depending on an amount of printing in the system 1, the sheet type to be used, or the like, the sheet feed device 40 may not be provided in the system 1, and the sheet may be conveyed only from the sheet feed section 15 of the image forming apparatus 10.

The image forming apparatus 10 forms a color image according to an electrophotographic method based on image data obtained by reading an image from a document or image data of the job received from an external device (not illustrated). The image forming apparatus 10 ejects the sheet after image formation to the first laminating device 20A.

As illustrated in FIGS. 1 and 2, the image forming apparatus 10 includes an operation part 11, a display part 12, a document reading unit 13, an image forming section (image former) 14, a sheet feed section 15, an image forming controller 16 (hardware processor), a storage section 17, a controller interface (IF) 18, and an image processing section 19.

The operation part 11 includes a touch screen formed so as to cover a display screen of the display part 12, and various operation buttons such as numeric buttons and a start button. The operation part 11 outputs an operation signal based on a user's operation to the image forming controller 16.

The display part 12 includes a liquid crystal display (LCD), and displays various screens in accordance with an instruction of a display signal input from the image forming controller 16.

The document reading unit 13 includes an automatic document feeder (ADF), a scanner, and the like. The document reading unit 13 outputs image data obtained by reading the image of the document to the image forming controller 16.

The image forming section 14 forms the image on the sheet supplied from the sheet feed section 15 or the sheet feed device 40 based on the image data on which the image processing has been performed by the image processing section 19.

The image forming section 14 includes photosensitive drums 141Y, 141M, 141C, and 141K corresponding to colors of yellow (Y), magenta (M), cyan (C), and black (K), an intermediate transfer belt 142, a secondary transfer roller 143, a fixing section 144, and the like.

The image forming section 14 uniformly charges the photosensitive drum 141Y, and then scans and exposes the photosensitive drum 141Y with a laser beam based on the image data for the yellow color, to form an electrostatic latent image on the photosensitive drum 141Y. Next, the image forming section 14 makes a yellow toner adhere to the electrostatic latent image on the photosensitive drum 141Y to develop the image.

The photosensitive drums 141M, 141C, and 141K work similarly to the photosensitive drum 141Y except that the respective colors are different, and thus the description thereof is omitted.

The image forming section 14 sequentially transfers the toner images in the respective colors formed on the photosensitive drums 141Y, 141M, 141C, and 141K, onto the rotating intermediate transfer belt 142 (primary transfer). That is, the image forming section 14 forms a color toner image in which the toner images of the four colors are superimposed on the intermediate transfer belt 142.

The image forming section 14 collectively transfers the color toner image on the intermediate transfer belt 142 onto the sheet by the secondary transfer roller 143 (secondary transfer).

The fixing section 144 includes a heating roller that heats the sheet onto which the toner image has been transferred and a pressure roller that presses the sheet, and fixes the color toner image onto the sheet by heating and pressing.

The sheet feed section 15 includes sheet feed trays 151 to 153, and supplies the sheets to the image forming section 14. Each of the sheet feed trays 151 to 153 stores sheets of a sheet type, a size, and the like that are predetermined for each sheet feed tray.

The image forming controller 16 includes a central processing unit (CPU), a random access memory (RAM), a read only memory (ROM), and the like.

The CPU of the image forming controller 16 reads various processing programs stored in the ROM, deploys the programs in the RAM, and comprehensively controls the operation of the image forming apparatus 10 in accordance with the various programs deployed in the RAM.

When performing a laminating process on the output sheet, the image forming controller 16 instructs the first laminating device 20A or the second laminating device 20B to perform the predetermined laminating process. In a case where the trimming process is performed on the output sheet, the image forming controller 16 instructs the trimming device 30 to perform a predetermined trimming process.

The storage section 17 is a nonvolatile storage device such as a hard disk drive (HDD) or a semiconductor memory that stores various data such as a program and image data. The storage section 17 stores data such as program data and various setting data so that the data can be read and written by the image forming controller 16.

The storage section 17 stores switching setting information indicating whether to perform automatic switching of the laminating device in laminating device control processing described later.

The controller IF 18 receives the image data input from the external device.

The image processing section 19 performs necessary image processing on the image data stored in the storage section 17, the image data obtained by reading the image from the document by the document reading unit 13, and the image data input from the external device. The image processing section 19 transmits the image data after the image processing to the image forming section 14. The image processing includes gradation processing, halftone processing, color conversion processing, and the like. The gradation processing is converting a gradation value of each pixel of the image data into a gradation value corrected such that the density level properties of the image formed on the sheet matches the target density level properties. The halftone processing is error diffusion processing, screen processing using an ordered dither method, or the like. The color conversion processing is converting each gradation value of RGB into each gradation value of CMYK.

The first laminating device 20A is provided between the image forming apparatus 10 and the second laminating device 20B.

The first laminating device 20A includes a controller 21A (hardware processor), a storage section 22A, a conveyance section 23A, a laminating section 24A as a laminating processor, a cutting section 25A, and the like.

The controller 21A includes a CPU, a RAM, a ROM, and the like. The CPU of the controller 21A reads various processing programs stored in the ROM, deploys the programs in the RAM, and comprehensively controls the operation of the first laminating device 20A in accordance with the various programs deployed in the RAM.

The controller 21A executes the laminating process on the sheet in response to an instruction signal received from the image forming apparatus 10. Alternatively, the controller 21A conveys the sheet in a bypass route 232 in response to the instruction signal received from the image forming apparatus 10.

The storage section 22A is a nonvolatile storage device such as an HDD or a semiconductor memory that stores various types of data such as a program. The storage section 22A stores data such as program data and various types of setting data in a manner readable and writable by the controller 21A.

The conveyance section 23A includes a conveyance route 231 that is a first route, the bypass route 232 that is a second route, a conveyance route switching section 233, and a plurality of rollers.

Under the control of the controller 21A, the conveyance section 23A switches, with the conveyance route switching section 233, a route for conveying the sheet conveyed from the image forming apparatus 10 to the conveyance route 231 or the bypass route 232.

The conveyance section 23A conveys, with use of the plurality of rollers, the sheet conveyed from the image forming apparatus 10 sequentially to the laminating section 24A and the cutting section 25A on the conveyance route 231. The conveyance section 23A ejects the sheet after the laminating process to the second laminating device 20B.

Alternatively, the conveyance section 23A conveys, with the plurality of rollers, the sheet conveyed from the image forming apparatus 10 on the bypass route 232 that does not pass through the laminating section 24A and the cutting section 25A, and ejects the sheet to the second laminating device 20B.

The laminating section 24A includes a first film supplying section (film supplier) 241, a second film supplying section (film supplier) 242, a bonding section 243, and a laminate fixing section 244.

The first film supplying section 241 supplies a film F1 which is formed in a roll shape and which includes a transparent synthetic resin film layer and an adhesive layer. The film F1 has an adhesive layer formed by applying a hot-melt adhesive to one side thereof (the side that comes into contact with the sheet).

The film F1 is conveyed from the first film supplying section 241 to a nip portion of the bonding section 243, and is bonded to the image surface of the sheet.

The second film supplying section 242 supplies a film F2 formed in a roll shape and made of a transparent synthetic resin film layer. That is, an adhesive layer is not formed on the film F2.

The film F2 is conveyed from the second film supplying section 242 to the nip portion (non-image surface of the sheet) of the bonding section 243.

The bonding section 243 includes a pair of rollers, and sandwiches the sheet and the films F1 and F2 at the nip portion formed by the pair of rollers. Thus, the bonding section 243 bonds the adhesive layer of the film F1 to the surface of the sheet. As a result, the sheet and the film F1 are bonded together. The bonding section 243 nips the film F1 and the film F2 in the nip portion formed by the pair of rollers between the sheets. Thus, the bonding section 243 bonds the film F2 to the adhesive layer of the film F1. As a result, the film F1 and the film F2 are bonded together, and in the conveyance route after the bonding section 243, the adhesive applied to the film F1 can be prevented from contacting the conveyance route.

The laminate fixing section 244 includes the heating roller that heats the sheet to which the films F1 and F2 are attached, and the pressure roller that presses the sheet. The laminate fixing section 244 melts the adhesive layer of the film F1 by heating, and fixes the film F1 to the sheet or the film F2 by pressurizing.

The first laminating device 20A includes, in a housing of the first laminating device 20A, an open/close door (not illustrated) for replacing the film F1 and the film F2, and a lock mechanism (not illustrated) of the open/close door. By opening the open/close door of the first laminating device 20A, the user can access a portion to which the film F1 and the film F2 is attached in the first laminating device 20A.

In the first embodiment, the controller 21A brings a lock mechanism for the open/close door of the first laminating device 20A into a locked state during execution of the laminating process by the laminating section 24A. When the laminating process is not performed by the laminating section 24A, the controller 21A sets the lock mechanism of the open/close door of the first laminating device 20A to a released state.

The cutting section 25A is provided downstream of the laminating section 24A in the conveyance route 231.

The cutting section 25A cuts the film F1 and the film F2 between the conveyed sheets.

The second laminating device 20B is provided between the first laminating device 20A and the trimming device 30.

The second laminating device 20B includes a controller 21B (hardware processor), a storage section 22B, a conveyance section 23B, a laminating section 24B as the laminating processor, a cutting section 25B, and the like.

The controller 21B, the storage section 22B, the laminating section 24B, and the cutting section 25B have the same configurations as the controller 21A, the storage section 22A, the laminating section 24A, and the cutting section 25A, respectively, and thus description thereof will be omitted.

The conveyance section 23B includes the conveyance route 231 that is the first route, the bypass route 232 that is the second route, the conveyance route switching section 233, and the plurality of rollers.

Under the control of the controller 21B, the conveyance section 23B switches, with the conveyance route switching section 233, the route for conveying the sheet conveyed from the first laminating device 20A to the conveyance route 231 or the bypass route 232.

The conveyance section 23B conveys, with use of the plurality of rollers, the sheet conveyed from the first laminating device 20A sequentially to the laminating section 24B and the cutting section 25B on the conveyance route 231. The conveyance section 23B ejects the sheet after the laminating process to the trimming device 30.

Alternatively, the conveyance section 23B conveys, with the plurality of rollers, the sheet conveyed from the first laminating device 20A on the bypass route 232 that does not pass through the laminating section 24B and the cutting section 25B, and ejects the sheet to the trimming device 30.

As described above, the system 1 includes the plurality of film supplying sections (the plurality of first film supplying sections 241) capable of supplying the film F1 to be laminated on the sheet.

The system 1 includes the plurality of film supplying sections (plurality of second film supplying sections 242) that can supply the film F2 to be laminated on the sheet.

Hereinafter, the first laminating device 20A and the second laminating device 20B will be referred to as laminating device 20 when not distinguished from each other.

When the controller 21A, the storage section 22A, the conveyance section 23A, the laminating section 24A, the cutting section 25A, the controller 21B, the storage section 22B, the conveyance section 23B, the laminating section 24B, and the cutting section 25B are not distinguished from each other, they are referred to as the controller 21, the storage section 22, the conveyance section 23, the laminating section 24, and the cutting section 25.

The trimming device 30 includes a conveyance section 31, a trimming section 32, a sheet ejection section 33, a debris box 34, and a sheet ejection tray T1. The sheet ejection tray T1 stacks the sheet discharged by the sheet ejection section 33.

The conveyance section 31 conveys the sheet conveyed from the second laminating device 20B to the trimming section 32, and conveys the sheet subjected to trimming processing in the trimming section 32 to the sheet ejection section 33.

The trimming section 32 trims the sheet conveyed by the conveyance section 31 at a predetermined trimming position.

The sheet ejection section 33 ejects the sheet conveyed by the conveyance section 31 to the outside of the apparatus (sheet ejection tray T1).

The debris box 34 is provided below the trimming section 32, and contains trimming debris generated when the sheet is trimmed by the trimming section 32.

Next, the operation of the system 1 according to the present embodiment will be described.

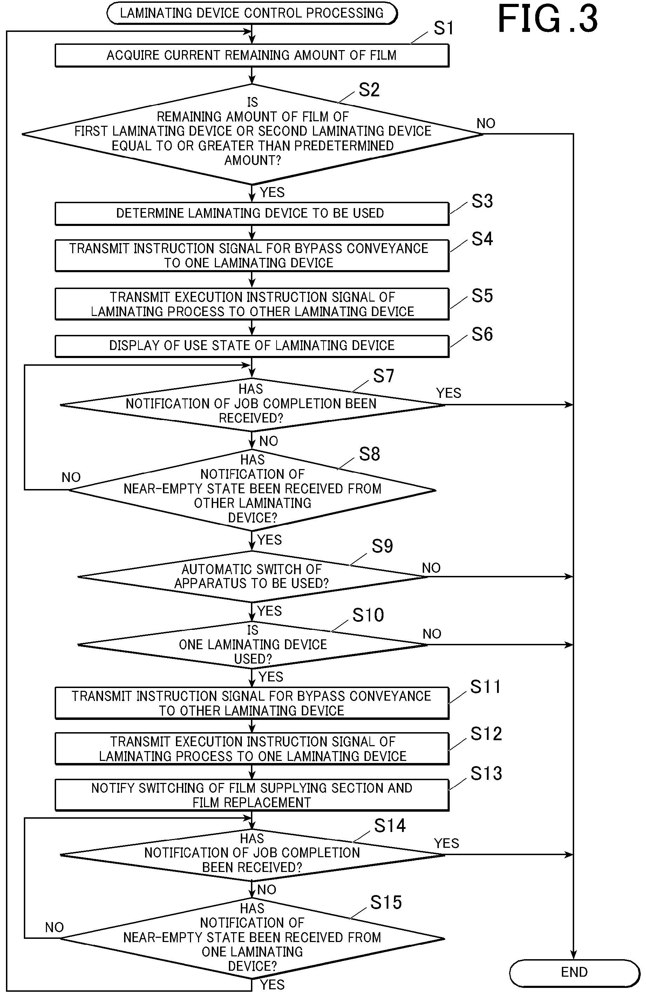

The system 1 executes the laminating device control processing illustrated in FIG. 3 in the following cases. Specifically, it is a case where the image forming apparatus 10 receives the job including the laminating process from the external device, or a case where it is input by the user via the operation part 11.

The system 1 executes the laminating device control processing to switch between the first laminating device 20A and the second laminating device 20B as the laminating device that executes the laminating process in the job including the laminating process. That is, the system 1 executes the laminating device control processing to switch the film supplying section that supplies the film to be laminated on the sheet.

In the first embodiment, the image forming controller 16 of the image forming apparatus 10 functions as a controller.

### (Laminating Device Control Processing)

The controller 21A of the first laminating device 20A calculates a feed amount of the film F1 at the current time point based on driving time or driving amount of a conveyance mechanism for conveying the film F1 after the film F1 is attached to the first film supplying section 241 of the laminating section 24A. Next, the controller 21A calculates the remaining amount of the film F1 at the current time point by subtracting the current feeding amount of the film F1 from the length of the film F1 at the time point when the film F1 is attached to the first film supplying section 241 of the laminating section 24A. The controller 21A calculates the feed amount of the film F2 at the current time point, based on the driving time or the driving amount of the conveyance mechanism for conveying the film F2 after the film F2 is attached to the second film supplying section 242 of the laminating section 24A. Next, the controller 21A calculates the current remaining amount of the film F2 by subtracting the current feed amount of the film F2 from the length of the film F2 at the time when the film F2 is attached to the second film supplying section 242 of the laminating section 24A. That is, the controller 21A detects the current remaining amount of the film F1 or F2 attached to the laminating section 24A. The controller 21A functions as a sensing section (sensor).

The controller 21A may sense the remaining amount of the film F1 attached to the laminating section 24A based on at least one of a radius of a film roll obtained by rolling the film F1, the number of rotations of the film roll, a traveling distance of the film roll, and a mark attached to the film roll. The controller 21A may sense the remaining amount of the film F2 attached to the laminating section 24 A based on at least one of a radius of a film roll obtained by rolling the film F2, the number of rotations of the film roll, a traveling distance of the film roll, and a mark attached to the film roll.

Next, the controller 21A outputs the current remaining amount of the films F1 and F2 attached to the laminating section 24A to the image forming apparatus 10.

Similarly, the controller 21B of the second laminating device 20B calculates the current remaining amount of the films F1 and F2 attached to the laminating section 24B, and outputs the calculated amount to the image forming apparatus 10. The controller 21B functions as a sensing section.

Next, the image forming controller 16 of the image forming apparatus 10 acquires, from the first laminating device 20A, the current remaining amounts of the films F1 and F2 attached to the laminating section 24A. In addition, the image forming controller 16 acquires, from the second laminating device 20B, the current remaining amount of the film F1 or F2 attached to the laminating section 24B (step S1).

Next, the image forming controller 16 determines whether or not the current remaining amount of the film F1 and F2 attached to the first laminating device 20A or the second laminating device 20B acquired in step S1 is a predetermined amount or more (step S2).

The predetermined amount is, for example, unusable lengths of the films F1 and F2, and lengths corresponding to the size of the target sheet of the job. The unusable length of the film F1 is the conveyance distance of the film F1 from the roll core of the film F1 to the bonding section 243. The unusable length of the film F2 is the conveyance distance of the film F2 from the roll core of the film F2 to the bonding section 243.

The predetermined amount may be a near-empty length described below.

When the current remaining amount of the film F1 or the film F2 attached to the first laminating device 20A is less than the predetermined amount, and the current remaining amount of the film F1 or the film F2 attached to the second laminating device 20B is less than the predetermined amount (step S2; NO), the image forming controller 16 ends the laminating device control processing.

The film F1 and the film F2 mounted on at least one of the first laminating device 20A and the second laminating device 20B, and the case where the film F2 is equal to or more than the predetermined amount (step S2; YES) will be described. In this case, the image forming controller 16 determines the laminating device 20 (apparatus to be used) to be used in the laminating process in the job (step S3).

To be specific, when the film F1 or the film F2 attached to one of the first laminating device 20A and the second laminating device 20B is less than a predetermined amount, the image forming controller 16 determines, as the apparatus to be used, the laminating device 20 to which the film F1 or the film F2 with the predetermined amount or more is attached.

A case where both the film F1 and the film F2 attached to the first laminating device 20A and the film F1 and the film F2 attached to the second laminating device 20B are equal to or more than the predetermined amount will be described. In this case, the image forming controller 16 determines, as the apparatus to be used, the laminating device 20 in which the remaining amount of the film F1 and the film F2 at the present time is small. Alternatively, the image forming controller 16 may determine the laminating device 20 used in the previously executed laminating process as the apparatus to be used.

Next, the image forming controller 16 transmits the instruction signal for bypass conveyance to the laminating device 20 that is not the apparatus to be used determined in step S3, the laminating device 20 being either the first laminating device 20A or the second laminating device 20B (step S4).

The controller 21 of the one laminating device 20 receives the instruction signal for bypass conveyance from the image forming apparatus 10. Next, the controller 21 conveys on the bypass route 232 the sheet conveyed from the device on the upstream side and discharges the sheet to the outside.

Next, the image forming controller 16 transmits the instruction signal to execute laminating process to the other laminating device 20, which is the apparatus to be used determined in step S3, the other laminating device 20 being the other one of the first laminating device 20A or the second laminating device 20B (step S5).

The controller 21 of the other laminating device 20 receives the instruction signal to execute the laminating process from the image forming apparatus 10. Next, the controller 21 conveys the sheet conveyed from the device on the upstream side to the laminating section 24 and the cutting section 25 in this order on the conveyance route 231, and executes the laminating process.

The controller 21 of the other laminating device 20 determines whether or not the job is completed every time laminating processing is performed on one sheet. When the job is completed, the controller 21 notifies the image forming apparatus 10 that the job has been completed.

Every time the laminating process is performed on one sheet, the controller 21 of the other laminating device 20 determines whether the film F1 attached to the other laminating device 20 and the current remaining amount of the film F2 are greater than or equal to the near-empty length. The near-empty length is the remaining amount of the films F1 and F2 at the timing at which the controller 21 senses the near-empty state. The timing at which the near-empty state is sensed is earlier than the maximum value of the amount of time required for switching the apparatus to be used until the remaining amount of the film F1 or the film F2 reaches the unusable length.

The amount of time required for switching the apparatus to be used (switching time) includes the amount of time until the film F1 is conveyed from the first film supplying section 241 to the bonding section 243. The switching time includes the amount of time until the film F2 is conveyed from the second film supplying section 242 to the bonding section 243. The switching time includes a moving time of the sheet from the laminating device 20 before the switching to the laminating device 20 after the switching. The switching time includes a pre-processing time for ensuring the quality of the laminating process.

If the other laminating device 20 is in the near-empty state, the controller 21 notifies the image forming apparatus 10 of the near-empty state.

The controller 21 of the other laminating device 20 may transmit, to the image forming apparatus 10, the current remaining amount of the film F1 and the film F2 attached to the other laminating device 20 every time the laminating process is performed on one sheet.

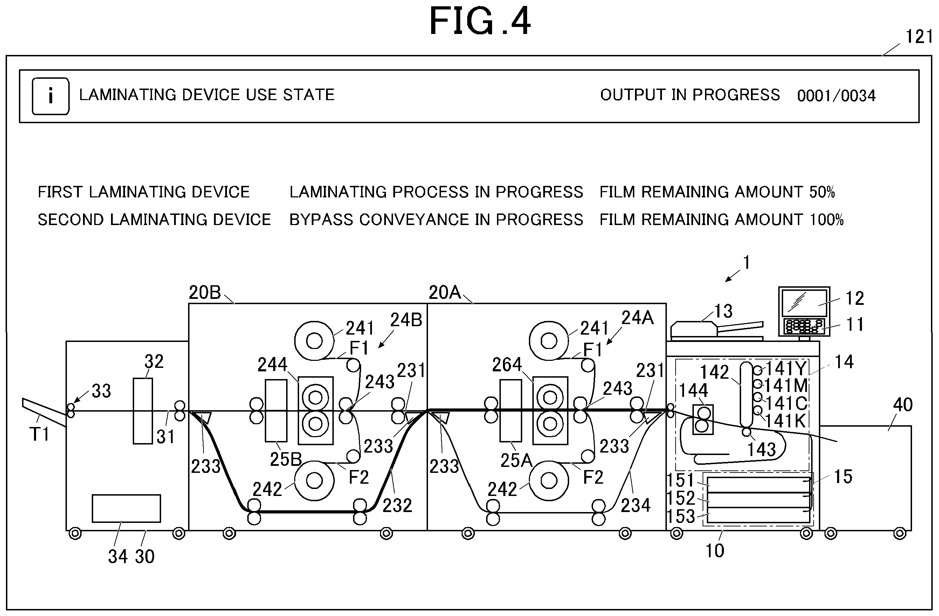

Next, the image forming controller 16 causes the display part 12 to display a use state screen 121 (see FIG. 4) indicating the use state of the laminating device 20 (step S6).

In the example shown in FIG. 4, the laminating device 20 that is executing the laminating process in the job is the first laminating device 20A. The laminating device 20 performing the bypass conveyance of the sheet is the second laminating device 20B. That is, the first film supplying section 241 and the second film supplying section 242 of the first laminating device 20A are in operation in the example illustrated in FIG. 4. The first film supplying section 241 and the second film supplying section 242 of the second laminating device 20B are not in operation in the example illustrated in FIG. 4. That is, while one of the plurality of laminating devices (e.g., the first laminating device 20A) is performing the laminating process on the sheet in the first route (the conveyance route 231) including the laminating processor, the other laminating device (e.g., the second laminating device 20B) conveys the sheet in the second route (the bypass route 232) in which the sheet is conveyed in a bypass manner.

As illustrated in FIG. 4, the image forming controller 16 displays, on the use state screen 121, the laminating device 20 that is executing the laminating process and the laminating device 20 that is conveying the sheet by bypass. The image forming controller 16 displays, in the use state screen 121, the conveyance route of the sheet in the first laminating device 20A and the second laminating device 20B with, for example, bold letters.

The image forming controller 16 displays, on the use state screen 121, the remaining amount of the film F1 and the film F2 attached to each laminating device 20. When the film F1 or the film F2 is not attached to the laminating device 20, the image forming controller 16 displays a message to that effect on the use state screen 121.

That is, the image forming controller 16 displays the operation states of the plurality of film supplying sections on the display part 12. The image forming controller 16 displays on the display part 12 at least one of the remaining amount of the film of each of the plurality of film supplying section or the fact that the film is not attached. The image forming controller 16 may cause the display part 12 to display that the remaining amount of the films F1 and F2 has become less than a predetermined amount.

Next, the image forming controller 16 determines whether a job completion notification has been received from the other laminating device 20 performing the laminating process (step S7).

When the completion notification of the job has been received (step S7; YES), the image forming controller 16 ends the laminating device control processing.

When the completion notification of the job is not received (step S7; NO), the image forming controller 16 determines whether a notification of a near-empty state is received from the other laminating device 20 (step S8).

When the notification of the near-empty state is not received from the other laminating device 20 (step S8; NO), the image forming controller 16 shifts the laminating device control processing to step S7.

In a case where the notification of the near-empty state is received from the other laminating device 20 (step S8; YES), the image forming controller 16 determines whether to automatically switch the apparatus to be used based on the switching setting information stored in the storage section 17 (step S9).

When the apparatus to be used is not automatically switched (step S9; NO), the image forming controller 16 ends the laminating device control processing.

In a case of automatically switching the apparatus to be used (step S9; YES), the image forming controller 16 determines whether to use one of the laminating devices 20 as the apparatus to be used (step S10). The one laminating device 20 is the laminating device 20 that has transmitted the instruction signal for the bypass conveyance in step S4.

In step S10, for example, when the type of the film F1 or F2 attached to the one laminating device 20 is different from the type of the film F1 or F2 attached to the other laminating device 20, the image forming controller 16 determines that the one laminating device 20 is not to be the apparatus to be used.

In step S10, for example, when the one laminating device 20 is in a near-empty state, the image forming controller 16 determines that the one laminating device 20 is not to be the apparatus to be used.

In step S10, for example, when the films F1 and F2 are not attached to the one laminating device 20, the image forming controller 16 determines that the one laminating device 20 is not to be the apparatus to be used.

When the one laminating device 20 is not set as the apparatus to be used (step S10; NO), the image forming controller 16 ends the laminating device control processing.

When the one laminating device 20 is set as the apparatus to be used (step S10; YES), the image forming controller 16 transmits the instruction signal for bypass conveyance to the other laminating device 20 (step S11).

The controller 21 of the other laminating device 20 receives the instruction signal for the bypass conveyance from the image forming apparatus 10. Next, the controller 21 conveys on the bypass route 232 the sheet conveyed from the device on the upstream side and discharges the sheet to the outside.

Next, the image forming controller 16 transmits the instruction signal for executing the laminating process to the one laminating device 20 (step S12).

The controller 21 of the one laminating device 20 receives the instruction signal to execute the laminating process from the image forming apparatus 10. Next, the controller 21 conveys the sheet conveyed from the device on the upstream side to the laminating section 24 and the cutting section 25 in this order on the conveyance route 231, and executes the laminating process.

The controller 21 of the one laminating device 20 determines whether or not the job is completed every time laminating processing is performed on one sheet. When the job is completed, the controller 21 notifies the image forming apparatus 10 that the job has been completed.

The controller 21 of the one laminating device 20 determines whether or not the one laminating device 20 is in the near-empty state every time the laminating processing is performed on one sheet. If the one laminating device 20 is in the near-empty state, the controller 21 notifies the image forming apparatus 10 of the near-empty state.

The controller 21 of the one laminating device 20 may transmit, to the image forming apparatus 10, the current remaining amount of the film F1 and the film F2 attached to the one laminating device 20 every time the laminating process is performed on one sheet.

As described above, the image forming controller 16 switches the film supplying sections (the first film supplying section 241 and the second film supplying section 242) that supply the films F1 and F2 according to the remaining amounts of the films F1 and F2 attached to the laminating device 20.

When the sheet is conveyed through the first route to perform the laminating process in the other laminating device 20 and the remaining amount of the film F1 or the film F2 becomes less than a predetermined amount, the image forming controller 16 switches the conveyance route of the sheet from the first route to the second route.

The image forming controller 16 executes step S11 and step S12, and adjusts the interval between the sheets to be conveyed to the first laminating device 20A. Specifically, the image forming controller 16 adjusts the interval between the sheets in accordance with the time required for switching the apparatus to be used from the other laminating device 20 to the one laminating device 20.

When it is necessary to insert an insertion sheet at a leading end or a trailing end of the sheet in the laminating section 24 of the one laminating device 20, the image forming controller 16 executes steps S11 and S12, and inserts the insertion sheet into the sheet fed from the sheet feed device 40 or the sheet feed section 15.

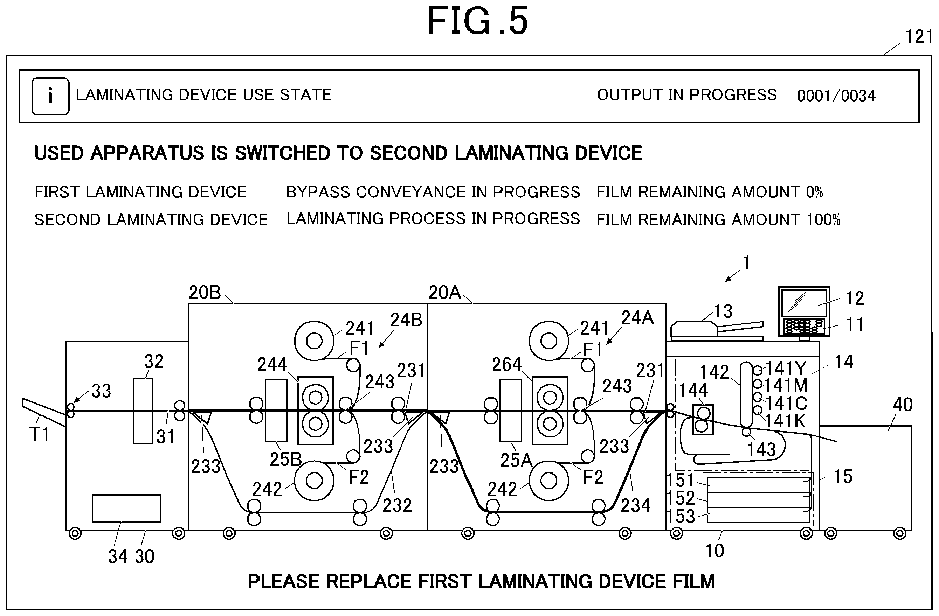

Next, as shown in FIG. 5, the image forming controller 16 displays a film supplying section switching notification and a film replacement notification on the use state screen 121 (step S13).

In the example illustrated in FIG. 5, the image forming controller 16 notifies the switching of the film supplying section by displaying, on the use state screen 121, that the apparatus to be used has been switched to the second laminating device 20B.

The image forming controller 16 displays, on the use state screen 121, a message prompting the user to replace the film in the first laminating device 20A that is in the near-empty state. That is, when the remaining amount of the film F1 or the film F2 is less than the amount of the film F1 or the film F2 required for the laminating process, the image forming controller 16 provides a notification prompting film replacement. At this time, the controller 21 of the first laminating device 20A releases the lock mechanism of the open/close door. The user opens the open/close door of the first laminating device 20A to perform the replacement of the film F1 and/or the film F2. That is, in the system 1, during the laminating process by the laminating section 24B, the film F1 and/or the film F2 of the film supplying section (the first film supplying section 241 and/or the second film supplying section 242) of the laminating section 24A which is not used for the laminating process is replaceable.

Next, the image forming controller 16 determines whether a job completion notification has been received from the one laminating device 20 performing the laminating process (step S14).

When the completion notification of the job has been received (step S14; YES), the image forming controller 16 ends the laminating device control processing.

When the completion notification of the job is not received (step S14; NO), the image forming controller 16 determines whether a notification of the near-empty state is received from the one laminating device 20 (step S15).

When the notification of the near-empty state is not received from the one laminating device 20 (step S15; NO), the image forming controller 16 shifts the laminating device control processing to step S14.

When the notification of the near-empty state is received from the one laminating device 20 (step S15; YES), the image forming controller 16 shifts the laminating device control processing to step S1.

In the first embodiment, the system 1 may include three or more laminating devices 20 between the image forming apparatus 10 and the trimming device 30. In this case, in step S10 of the laminating device control process, the image forming controller 16 may determine a preset laminating device 20 as the apparatus to be used. Alternatively, in step S10, the image forming controller 16 may determine the laminating device 20 to be the apparatus to be used on the basis of the priority set in advance.

### <Second Embodiment>

Next, a second embodiment will be described. The following description will be focused on the differences from the first embodiment described above.

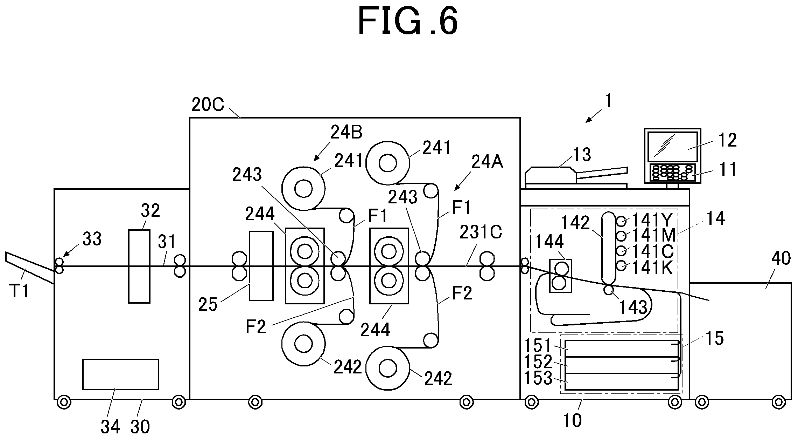

As illustrated in FIG. 6, the system 1 of the second embodiment includes a laminating device 20C between the image forming apparatus 10 and the trimming device 30, instead of the first laminating device 20A and the second laminating device 20B.

The laminating device 20C includes laminating sections 24A and 24B, which are a plurality of laminating sections 24, on the common conveyance path 231C.

The laminating device 20C includes a moving mechanism which separates the laminating section 24 which is not used for the laminating process from the common conveyance path 231C and arranges the laminating section 24 which is used for the laminating process on the common conveyance path 231C.

Next, the switching operation of the laminating section 24 in the second embodiment will be described.

In the system 1, it is assumed that the laminating section 24A is arranged on the common conveyance path 231C, the laminating section 24A performs the laminating process, and the laminating section 24B is separated from the common conveyance path 231C. At this time, it is assumed that the current remaining amounts of the film F1 and the film F2 of the laminating section 24B are equal to or greater than the near-empty lengths.

The controller 21 of the laminating device 20C senses the current remaining amount of the films F1 and F2 in the laminating section 24A during execution of the job including the laminating process. When sensing that the current remaining amount of the film F1 or the film F2 in the laminating section 24A is less than the near-empty length, the controller 21 executes the operation of switching the laminating section 24.

In the switching operation, the controller 21 cuts the film F1 and the film F2 supplied by the laminating section 24A. Next, the controller 21 causes the moving mechanism to separate the laminating section 24A from the common conveyance path 231C. That is, the controller 21 separates from the common conveyance path 231C the laminating section 24 corresponding to the film supplying section (the first film supplying section 241 or the second film supplying section 242) in which the remaining amount of the film F1 or the film F2 is less than the predetermined amount.

Next, the controller 21 causes the moving mechanism to dispose the laminating section 24B on the common conveyance path 231C. Next, the first film supplying section 241 of the laminating section 24B supplies the film F1 to the nip portion of the bonding section 243. In addition, the second film supplying section 242 of the laminating section 24B supplies the film F2 to the nip portion of the bonding section 243.

### <Third Embodiment>

Next, a third embodiment will be described. The following description will be focused on the differences from the first embodiment described above.

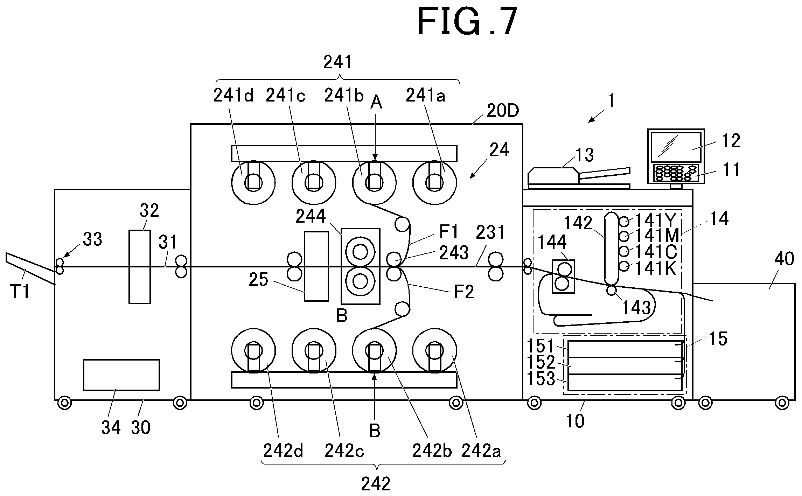

As illustrated in FIG. 7, the system 1 of the third embodiment includes a laminating device 20D between the image forming apparatus 10 and the trimming device 30, instead of the first laminating device 20A and the second laminating device 20B.

The laminating section 24 of the laminating device 20D includes a plurality of first film supplying sections 241 and a plurality of second film supplying sections 242 on the conveyance route 231.

The plurality of first film supplying sections 241 include first film supplying sections 241a, 241b, 241c, and 241d.

The plurality of first film supplying sections 241 are each slidably movable in a right direction in the drawing toward a set position A under the control of the controller 21. The first film supplying section 241 moved to the set position A supplies the film F1 to the nip portion of the bonding section 243.

The plurality of second film supplying sections 242 include second film supplying sections 242a, 242b, 242c, and 242d.

The plurality of second film supplying sections 242 are each slidably movable in the right direction in the drawing toward a set position B under the control of the controller 21. The second film supplying section 242 moved to the set position B supplies the film F2 portion to the nip portion of the bonding section 243.

The laminating section 24 includes a first connecting portion (connector) (not illustrated) that, when the first film supplying section 241 is switched, connects the film F1 supplied by the first film supplying section 241 before the switching and the film F1 supplied by the first film supplying section 241 after the switching.

The laminating section 24 includes a second connecting portion (connector) (not illustrated) that, when the second film supplying section 242 is switched, connects the film F2 supplied by the second film supplying section 242 before the switching and the film F2 supplied by the second film supplying section 242 after the switching.

Next, the switching operation of the first film supplying section 241 in the third embodiment will be described.

In the example illustrated in FIG. 7, the first film supplying section 241b is arranged at the set position A and supplies the film F1 to the nip portion of the bonding section 243. The controller 21 of the laminating device 20D senses the current remaining amount of the film F1 in the first film supplying section 241b. When sensing that the currently remaining amount of the film F1 in the first film supplying section 241b is less than the near-empty length, the controller 21 executes the switching operation of the first film supplying section 241.

The controller 21 cuts the film F1 of the first film supplying section 241b by the first connecting portion. Next, the controller 21 causes the first film supplying section 241b to slide in the right direction in the drawing and to be separated from the set position A. Next, the controller 21 moves the first film supplying section 241c to slide to the set position A and arranges it at the set position A. Next, the controller 21 causes the first connecting portion to connect the trailing end of the cut film F1 and the leading end of the film F1 of the first film supplying section 241c. Next, the first film supplying section 241c supplies the film F1 to the nip portion of the bonding section 243.

Next, the switching operation of the second film supplying section 242 in the third embodiment will be described.

In the example illustrated in FIG. 7, the second film supplying section 242b is arranged at the set position B and supplies the film F2 to the nip portion of the bonding section 243. The controller 21 of the laminating device 20D senses the current remaining amount of the film F2 in the second film supplying section 242b. When sensing that the currently remaining amount of the film F2 in the second film supplying section 242b is less than the near-empty length, the controller 21 executes the switching operation of the second film supplying section 242.

The controller 21 cuts the film F2 of the second film supplying section 242b by the second connecting portion. Next, the controller 21 causes the second film supplying section 242b to slide in the right direction in the drawing and to be separated from the set position B. Next, the controller 21 moves the second film supplying section 242c to slide to the set position B and arranges it at the set position B. Next, the controller 21 causes the second connecting portion to connect the trailing end of the cut film F2 and the leading end of the film F2 of the second film supplying section 242c. Next, the second film supplying section 242c supplies the film F2 to the nip portion of the bonding section 243.

As described above, the laminating device 20D of the third embodiment can switch the first film supplying section 241 that supplies the film F1 to the one laminating section 24. The laminating device 20D of the third embodiment is capable of switching the second film supplying section 242 that supplies the film F2 to the one laminating section 24.

### <Effects>

As described above, the laminating system (system 1) according to the present embodiment includes the plurality of film supplying sections (the first film supplying section 241 and the second film supplying section 242) capable of supplying the films F1 and F2 to be laminated on the sheet.

The laminating system includes the laminating processor (laminating section 24) that laminates the films F1 and F2 supplied from the film supplying section on the sheet.

In the laminating system, the film supplying sections that supply the films F1 and F2 are switchable.

Therefore, during the execution of the job including the laminating process, the film supplying section for supplying the film used for the laminating process can be switched. Thus, it is possible to prevent interruption of the laminating process for film replacement due to running out of the film during the laminating process, thereby suppressing a decrease in productivity in the laminating process.

In the laminating system (system 1) according to the present embodiment, the film supplying sections (the first film supplying section 241 and the second film supplying section 242) that supply the films F1 and F2 are switched according to the remaining amount of the films F1 and F2.

Therefore, the laminating process can be executed by using the film supplying section in which the remaining amount of the films F1 and F2 is equal to or more than the near-empty length. Thus, it is possible to prevent interruption of the laminating process for film replacement due to running out of the film during the laminating process.

In the laminating system (system 1) according to the present embodiment, a plurality of laminating devices 20 each including the film supplying section (the first film supply section 241 and the second film supply section 242) and the laminating processor (the laminating section 24) can be connected.

Therefore, even when one of the laminating devices 20 becomes empty, the other laminating device 20 can be used to perform the laminating process.

The laminating system (system 1) according to the present embodiment includes the plurality of laminating devices (first laminating device 20A and second laminating device 20B).

The plurality of laminating devices each include, as sheet conveyance routes, the first route (conveyance route 231) that passes through the laminating processor (laminating section 24) and the second route (bypass route 232) that bypasses the first route.

Therefore, the sheet can be conveyed so that the laminating process is executed in the one laminating device 20 and the laminating process is not executed in the other laminating device 20.

In the laminating system (system 1) according to the present embodiment, while the laminating process is being performed on the sheet in the first route (conveyance route 231) in one of the laminating devices of the plurality of laminating devices (first laminating device 20A and second laminating device 20B), the other laminating device conveys the sheet in the second route (bypass route 232).

Therefore, the sheet can be conveyed so that the laminating process is executed in the one laminating device 20 and the laminating process is not executed in the other laminating device 20.

In the laminating system (system 1) according to the present embodiment, when the sheet is being conveyed by the first route (conveyance route 231) and the remaining amount of the film F1 or F2 becomes less than a predetermined amount, the conveyance route of the sheet is switched from the first route to the second route (bypass route 232).

Therefore, in the laminating device 20 in the near-empty state, the sheet can be conveyed without performing the laminating process.

The laminating system (system 1) according to the present embodiment includes the laminating device 20D including the laminating processor (laminating section 24) and the plurality of film supplying sections (first film supplying section 241 and second film supplying section 242).

In the laminating device 20D, the film supplying section that supplies the film to the one laminating processor is switchable.

Therefore, during the execution of the job including the laminating process, the film supplying section for supplying the film used for the laminating process can be switched. Thus, it is possible to prevent interruption of the laminating process for film replacement due to running out of the film during the laminating process.

In the laminating system (system 1) according to the present embodiment, the laminating device 20D has a connecting portion (first connecting portion, second connecting portion) that connects the films F1, F2 of the film supplying section before switching and the films F1, F2 of the film supplying section after switching when switching the film supplying section (first film supplying section 241, second film supplying section 242).

Therefore, the film supplying section can be switched without interrupting the laminating process.

The laminating system (system 1) according to the present embodiment includes the laminating device 20C having the plurality of laminating processors (laminating sections 24A and 24B) on the common conveyance path 231C.

The plurality of film supplying sections (the first film supplying section 241 and the second film supplying section 242) can supply the films F1 and F2 to the respective corresponding laminating processors.

In the laminating device 20C, the laminating processor for laminating the films F1 and F2 on the sheet can be switched.

Therefore, during execution of the job including the laminating process, the laminating section 24 to be used for the laminating process can be switched. Thus, it is possible to prevent interruption of the laminating process for film replacement due to running out of the film during the laminating process.

In the laminating system (system 1) according to the present embodiment, the laminating processors (laminating sections 24A and 24B) corresponding to the film supplying sections (first film supplying section 241 and second film supplying section 242) in which the remaining amount of the film is less than the predetermined amount are separated from the common conveyance path 231C.

Therefore, the sheet can be conveyed so that the laminating process is executed in the one laminating section 24 and the laminating process is not executed in the other laminating section 24.

The laminating system (system 1) according to the present embodiment includes the sensing section (image forming controller 16, controller 21) that senses the remaining amount of the films F1 and F2.

The sensing section senses the residual amounts of the films F1 and F2 on the basis of at least one of the radius of the film rolls obtained by rolling the films F1 and F2, the number of rotations of the film rolls, the traveling distances of the film rolls and the marks attached to the film rolls.

Therefore, the sensing of the remaining amount of the film F1 or F2 can be easily done.

The laminating system (system 1) according to the present embodiment adjusts the interval between the sheets when switching the film supplying sections (the first film supplying section 241 and the second film supplying section 242) according to the amount of time required for switching the film supplying sections.

Therefore, in the sheet interval, the film supplying section can be switched without interrupting the laminating process.

In the laminating system (system 1) according to the present embodiment, the laminating processor (laminating section 24) laminates the films F1 and F2 on the flat cut sheet as the sheet.

The laminating processor laminates the film on only one side of the sheet or laminates the film on both sides of the sheet.

Therefore, also in the laminating system having the above-described configuration, it is possible to prevent interruption of the laminating process for film replacement due to running out of the film during the laminating process.

The laminating system (system 1) according to the present embodiment includes the image forming section 14 that forms the image on the sheet fed from the sheet feed section.

The laminating processor (laminating section 24) laminates the films F1 and F2 on the sheet on which the image has been formed by the image forming section 14.

Therefore, also in an in-line laminating system, it is possible to prevent the film from running out during the laminating process and to prevent the laminating process from being interrupted for film replacement.

The laminating system (system 1) according to the present embodiment displays the operation states of the plurality of film suppling sections (the first film supplying section 241 and the second film supplying section 242) on the display part 12.

Therefore, the user can easily grasp the film supplying section being used for the laminating process.

The laminating system (system 1) according to the present embodiment displays, on the display part 12, at least one of the following, the remaining amount of the film F1 or F2 in each of the plurality of film supplying sections (the first film supplying section 241 and the second film supplying section 242), the remaining amount of the film F1 or F2 becoming less than a predetermined amount, and the film F1 or F2 not being attached.

Therefore, the user can easily grasp at least one of the remaining amount of the film F1 or the film F2 attached to the laminating section 24, the remaining amount of the film F1 or the film F2 becoming less than the predetermined amount, and the film F1 or the film F2 not attached.

The laminating system (system 1) according to the present embodiment provides a notification prompting replacement of the film F1 or F2 if the remaining amount of the film F1 or F2 is less than the amount of film required for the laminating process.

Therefore, the user can easily grasp the necessity of replacing the film F1 or F2.

When the film supplying sections (the first film supplying section 241 and the second film supplying section 242) that supply the films F1 and F2 are switched, the laminating system (system 1) according to the present embodiment provides a notification to that effect.

Therefore, the user can easily grasp that the film supplying section has been switched.

In the laminating system (system 1) according to the present embodiment, the films F1 and F2 of the film supplying sections (first film supplying section 241 and second film supplying section 242) not used in the laminating process can be replaced during the laminating process by the laminating processor (laminating section 24).

Therefore, the film can be replaced without interrupting the laminating process.

Although the present invention has been described in detail based on the embodiment, the present invention is not limited to the above-described embodiment. The embodiment can be modified without departing from the spirit and scope of the invention.

For example, the laminating method of the above-described embodiment is a hot laminating method in which the adhesive layer of the film F1 is melted and fixed by the laminate fixing section 244, but the invention is not limited thereto. The laminating method may be a cold laminating method in which fixing is performed by an adhesive layer of the film F1 that can be adhered at room temperature without heating in the laminate fixing section 244.

The laminating section 24 of the above embodiment affixes the film F1 to the image surface of the sheet and affixes the film F2 to the non-image surface of the sheet, but is not limited to this. The laminating section 24 may apply the film to either the image surface of the sheet or the non-image surface of the sheet.

In a case where the film is to be applied only to the image side of the sheet and the film being used in the laminating process has a length shorter than the near-empty length, the controller 21 may execute the following processing. Specifically, the controller 21 reverses the image side of the sheet before the laminating process. Next, the controller 21 executes the laminating process with the other film having the length greater than or equal to the near-empty length.

Although the case where the entity that executes the laminating device control processing is the image forming controller 16 of the image forming apparatus 10 has been illustrated in the above-described first embodiment, it is not limited thereto. For example, the controller 21 of the laminating device 20 may perform the laminating device control processing. In this case, the controller 21 of the laminating device 20 corresponds to the "controller".

The detailed configuration and the detailed operation of each device constituting the laminating system can be appropriately changed without departing from the scope of the present invention.

Although embodiments of the present invention have been described and shown in detail, the disclosed embodiments are made for purposes of illustration and example only and not limitation. The scope of the present invention should be interpreted by terms of the appended claims.

## Claims

1. A laminating system comprising:
a plurality of film suppliers configured to be capable of supplying a film to be laminated on a sheet; and
a laminating processor that laminates the film supplied from the film supplier onto the sheet,
wherein the film supplier that supplies the film can be switched.

2. The laminating system according to claim 1, wherein the film supplier that supplies the film is switched in accordance with a remaining amount of the film.

3. The laminating system according to claim 1, wherein a plurality of laminating devices each including the film supplier and the laminating processor can be connected.

4. The laminating system according to claim 3,
further comprising a plurality of the laminating devices,
wherein each of the plurality of laminating devices includes, as conveyance routes of the sheet, a first route that passes through the laminating processor and a second route that bypasses the first route.

5. The laminating system according to claim 4, wherein, while a laminating process is being performed on the sheet in the first route in one laminating device among the plurality of laminating devices, another laminating device conveys the sheet in the second route.

6. The laminating system according to claim 4, wherein the conveyance route of the sheet is switched from the first route to the second route in a case in which the sheet is being conveyed by the first route and a remaining amount of the film becomes less than a predetermined amount.

7. The laminating system according to claim 1,
further comprising a laminating device including the laminating processor and the plurality of film suppliers,
wherein, in the laminating device, the film supplier that supplies the film to one of the laminating processors can be switched.

8. The laminating system according to claim 7, wherein the laminating device includes a connector that connects the film of the film supplier before switching and the film of the film supplier after switching when switching the film supplier.

9. The laminating system according to claim 1,
further comprising a laminating device including a plurality of laminating processors on a common conveyance path,
wherein the plurality of film suppliers are each configured to be able to supply the film to a corresponding laminating processor, and
wherein in the laminating device, the laminating processor that laminates the film onto the sheet can be switched.

10. The laminating system according to claim 9, wherein the laminating processor corresponding to the film supplier in which a remaining amount of the film is less than a predetermined amount is separated from the common conveyance path.

11. The laminating system according to claim 1, further comprising a sensor that senses a remaining amount of the film.

12. The laminating system according to claim 1, wherein an interval between the sheets when the film supplier is switched is adjusted according to time required for switching the film supplier.

13. The laminating system according to claim 1,
further comprising an image former that forms an image on the sheet fed from a sheet feeder,
wherein the laminating processor laminates the film onto the sheet on which the image is formed by the image former.

14. The laminating system according to claim 1, wherein, during a laminating process by the laminating processor, the film of the film supplier not used for the laminating process can be replaced.

15. A program that controls a computer of a laminating system including a plurality of film suppliers configured to be capable of supplying a film to be laminated on a sheet and a laminating processor that laminates the film supplied from the film supplier onto the sheet, the program allowing the computer to function as:
a controller that switches the film supplier that supplies the film.
